# FASCICULE DE BREVET EUROPEEN

(11) **EP 0 457 679 B1**
(45) Date de publication et mention de la délivrance du brevet: **18.01.1995**
(21) Numéro de dépôt: 91401255.4
(22) Date de dépôt: 15.05.1991
(51) Int. Cl.: A01C 11/00

(54) **Machine à planter ou à repiquer**
Maschine zum Pflanzen oder Verpflanzen
Machine for planting or transplanting

(30) Priorité: 15.05.1990 FR 9006053
(43) Date de publication de la demande: 21.11.1991
(73) Titulaire: S.A.R.L. ETS. GREGOIRE-BESSON et Cie, F-49230 Montigne-sur-Moine (FR)
(72) Inventeur: Besson, Alphonse, F-49230 Montigne-sur-Moine (FR)
(74) Mandataire: Dawidowicz, Armand

(56) Documents cités:
- US-A- 1 486 512
- US-A- 2 609 767
- US-A- 2 961 979
- US-A- 3 719 158

## Description

L'invention concerne une machine à planter ou à repiquer des plants à racine tels que certains légumes ou arbustes, du type comprenant un châssis sur roues muni d'un soc d'ouverture d'un sillon, des moyens de fermeture du sillon, un moyen transporteur de plants agencé pour recevoir les plants amenés par un opérateur à une entrée dudit moyen transporteur et pour libérer les plants les uns après les autres à intervalles prédéterminés entre le soc et les moyens de fermeture du sillon, lesdits plants étant déplacés par ledit moyen transporteur avant le point de libération selon une translation sensiblement parallèle au sol en étant maintenus sensiblement verticaux, le moyen transporteur comprenant deux bandes sans fin en Matériau souple déplacées à la même vitesse linéaire, lesdites bandes étant maintenues en contatc l'une avec l'autre face à face entre un point de chargement des plants et un point de libération des plants, lesdites bandes étant maintenues écartées l'une de l'autre en amont dudit point de chargement et en aval dudit point de libération, ladite machine comprenant un dispositif de chargement des plants au point de chargement ledit dispositif de chargement étant constitué par une bande sans fin.

De telles machines sont utilisées pour planter à grande échelle des lignes de plants dans le sillon creusé par le soc, un opérateur assis sur la machine alimentant le moyen transporteur.

Une telle machine est connue par exemple par US-A 1 765 468 et l'aménagement du moyen transporteur donnant aux plants portés sensiblement perpendiculairement au sol, une trajectoire sensiblement parallèle au sol, assure que le plant planté ou repiqué occupe une position idéale au moment où il est libéré puis partiellement enterré par les moyens de fermeture du sillon.

Dans cette machine connue, le moyen transporteur est constitué par une chaîne portant à espacements réguliers des supports à pince pour les plants. Ce mode de transport présente les inconvénients de risquer de blesser les plants par les pinces et de ne permettre qu'un écartement prédéterminé des plants égal à l'espacement linéaire des supports à pince. Pour modifier l'écartement, il est nécessaire de faire varier l'espacement et, donc le nombre des pinces, ce qui est une opération longue et coûteuse. En outre, un écartement minimal limité est dû à l'utilisation de ces supports à pinces, ce qui ne permet pas de planter ou de repiquer les plants très serrés. Les mécanismes à pince sont en outre compliqués, onéreux et fragiles du fait de leur structure même et de la nécessité de prévoir des moyens d'ouverture avant la réception du plant et lors de sa libération et des moyens de fermeture entre ces deux positions.

DE-U 88 04 306 et FR-A 1 074 522 décrivent des machines analogues qui présentent les mêmes inconvénients.

US-A- 2.609.767 décrit une machine du type cité à l'introduction dans laquelle le dispositif de chargement est constitué d'organes sans fin munis de pinces, qui présentent lors du chargement les inconvénients précédents.

La présente invention vise à fournir une machine du type décrit à l'introduction qui ne présente pas les inconvénients des machines connues et qui permette en particulier de déposer les plants à des intervalles librement variés, sans risque de les blesser, tout en ayant une structure simple, économique et robuste.

A cet effet, la machine selon l'invention est caractérisée en ce que ladite bande sans fin est entraînée en synchronisme avec lesdites bandes en matériau souple et munie d'encoches transversales sur sa face externe pour recevoir un plan dans chaque encoche sans le pincer, le brin supérieur de ladite bande sans fin étant horizontal ou oblique par rapport à au moins une desdites bandes en matériau souple et son extrémité aval étant voisine du point de chargement des plants où les deux bandes en matériau souple se rejoignent.

L'utilisation de bandes souples, par exemple en matériau synthétique alvéolaire, assure que les plants ne sont pas blessés en étant simplement serrés entre les faces opposées adjacentes des bandes dans la trajectoire de transport des plants. En outre, ce mode de serrage permet d'introduire les plants à tout écartement voulu.
de préférence, les bandes en matériau souple et le dispositif de chargement sont entraînés en synchronisme à partir d'une roue de la machine.

L'invention sera bien comprise à la lecture de la description suivante faite en se référant au dessin annexé dans lequel :

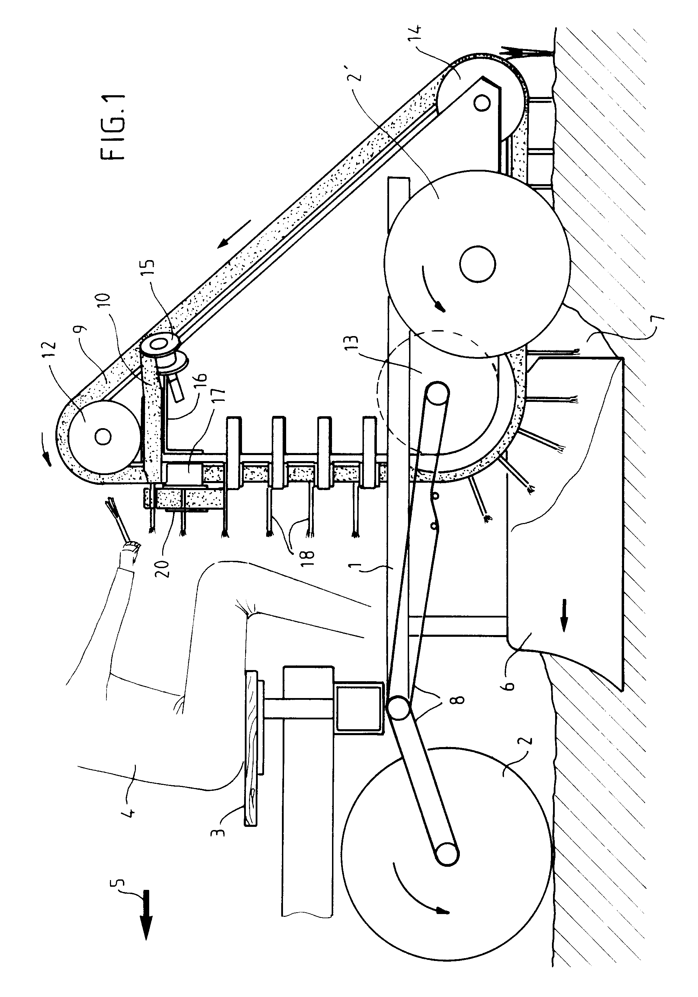

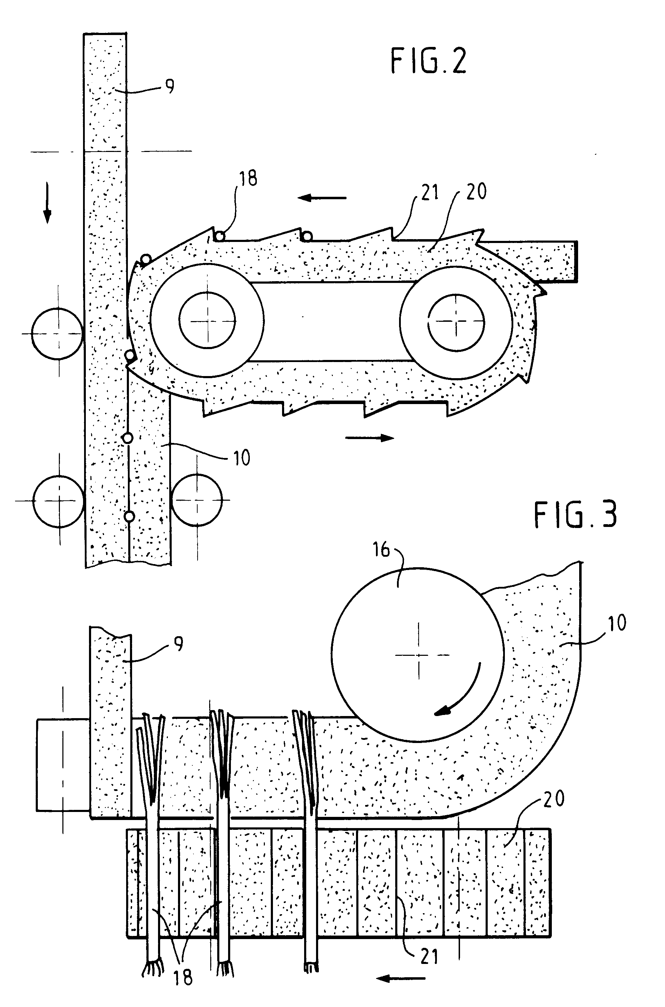

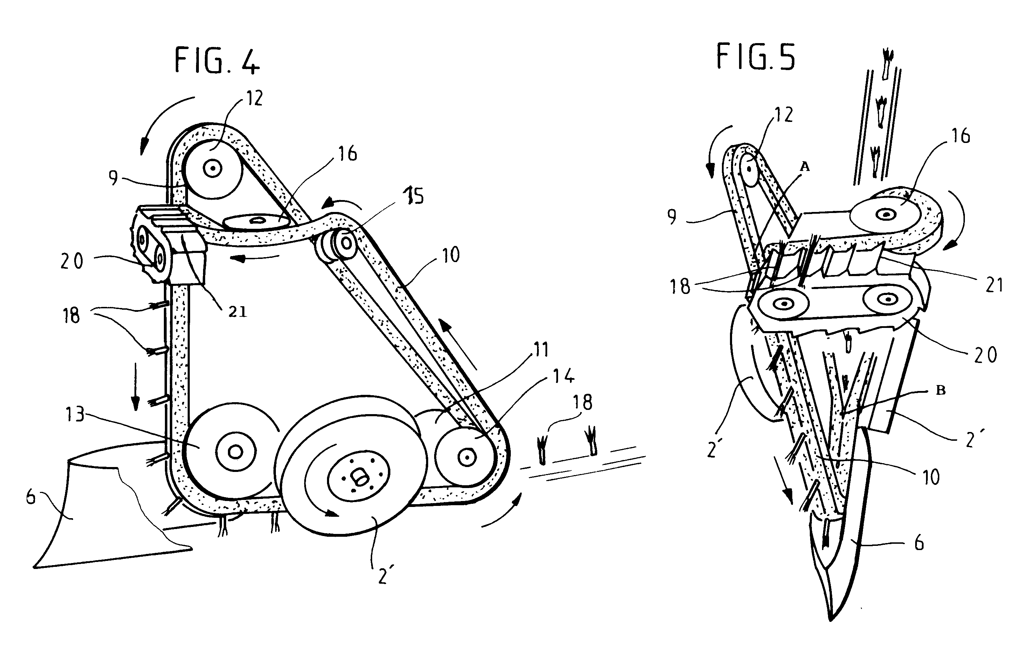

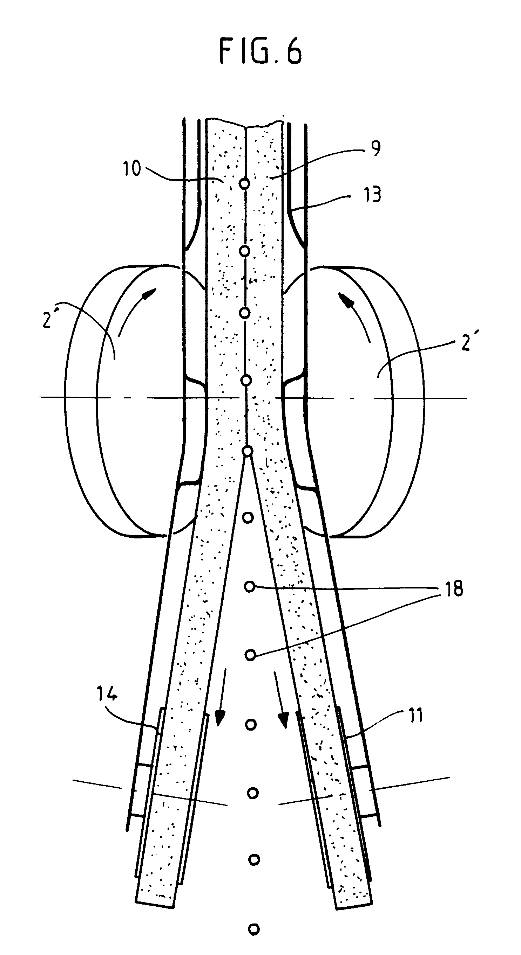

la figure 1 est une vue schématique en élévation latérale d'une machine selon un exemple de réalisation de l'invention, la figure 2 est une vue schématique de face d'un dispositif de chargement, la figure 3 est une vue de dessus du dispositif de la figure 2, la figure 4 est une vue schématique en perspective des deux bandes en matériau souple et du dispositif de chargement de la machine de la figure 1, la figure 5 est une vue schématique en perspective de dessus de l'ensemble de la figure 4, la figure 6 est une vue schématique d'une partie de la machine au point de libération des plants.

La machine représentée aux figures 1 et 4 comprend un châssis 1, muni d'un rouleau transversal moteur 2 et de roues tasseuses 2' et attelé à un tracteur (non représenté). Le châssis 1 porte un siège 3 pour un opérateur 4 qui est assis dans le sens inverse de la marche 5. Le châssis 1 porte en outre un soc 6 qui creuse un sillon 7.

Les roues motrices avant 2 entraînent par l'intermédiaire de chaînes 8, deux bandes sans fin 9 et 10 en matériau souple, par exemple en matériau synthétique. La bande sans fin 9 est guidée par des rouleaux 11, 12 et 13 selon une trajectoire sensiblement triangulaire. La bande sans fin 10 est guidée par quatre rouleaux 14, 15, 16, 17, et le rouleau 13, selon une trajectoire approximativement en forme de quadrilatère. Les chaînes (8) entraînent la roue 13 commune aux deux bandes.

La disposition est telle que les bandes 9 et 10 sont accolées l'une contre l'autre, dans le sens d'avance des bandes, entre la roue 17, qui correspond au point de chargement des plants 18 et le droit des roues 2', qui est le point de libération des plants 18. En amont de la roue 17, les bandes 9 et 10 ont des trajectoires différentes et sont écartées l'une de l'autre.

Une bande sans fin 20, munie d'encoches transversales 21 sur sa face supérieure, est disposée sensiblement orthogonalement à la bande 9 au voisinage du rouleau 17 et est entraînée par l'axe de ce rouleau 17 en synchronisme avec les bandes 9, 10 et la roue avant 2 de la machine. L'opérateur 4 dépose les plants dans les encoches 21 et, au retour de la bande sans fin 20 au voisinage du rouleau 17, les plants 18 sont saisis entre les bandes 9 et 10. Elles sont déplacées avec les bandes 9,10 selon une trajectoire dont la partie terminale, entre les roues 13 et 2', est parallèle au sol, les plants 18 étant maintenus orthogonaux au sol. Les roues arrière 2' referment le sillon 7 après que les plants 18 y aient été déposés.

## Revendications

1. Machine à planter ou à repiquer des plants à racine (18) tels que certains légumes ou arbustes, du type comprenant un châssis (1) sur roues (2,2') muni d'un soc (6) d'ouverture d'un sillon (7), des moyens de fermeture du sillon (2'), un moyen transporteur (9,10) de plants agencé pour recevoir les plants (18) amenés par un opérateur (4) à une entrée (A) dudit moyen transporteur (9,10) et pour libérer les plants (18) les uns après les autres à intervalles prédéterminés entre le soc (6) et les moyens de fermeture du sillon (2'), lesdits plants (18) étant déplacés par ledit moyen transporteur (9,10) avant le point de libération (B) selon une translation sensiblement parallèle au sol en étant maintenus sensiblement verticaux, le moyen transporteur comprenant deux bandes sans fin (9, 10) en matériau souple déplacées à la même vitesse linéaire, lesdites bandes (9, 10) étant maintenues en contact l'une avec l'autre face à face entre un point de chargement (A) des plants (18) et un point de libération (B) des plants (18), lesdites bandes (9, 10) étant maintenues écartées l'une de l'autre en amont dudit point de chargement (A) et en aval dudit point de libération (B), ladite machine comprenant un dispositif de chargement (20, 21) des plants (18) au point de chargement (A) ledit dispositif de chargement étant constitué par une bande sans fin (20),
caractérisée en ce que ladite bande sans fin est entraînée en synchronisme avec lesdites bandes en matériau souple [9, 10] et munie d'encoches transversales (21) sur sa face externe pour recevoir un plant (18) dans chaque encoche (21) sans le pincer, le brin supérieur de ladite bande sans fin (20) étant horizontal ou oblique par rapport à au moins une desdites bandes (9, 10) en matériau souple et son extrémité aval étant voisine du point de chargement (A) des plants (18) où les deux bandes (9, 10) en matériau souple se rejoignent.

2. Machine selon la revendication 1,
caractérisée en ce que lesdites bandes (9,10) sont en matériau synthétique.

3. Machine selon l'une des revendications 1 et 2,
caractérisée en ce que les bandes en matériau souple (9,10) et le dispositif de chargement (20,21) sont entraînés en synchronisme à partir d'une roue (2) de la machine.

## Claims

1. A machine for planting or bedding out rooted seedlings (18) such as some vegetables or bushes, of the type comprising a chassis (1) on wheels (2, 2') provided with a plough share (6) for opening up a furrow (7), means (2') for closing the furrow, a transport means (9, 10) for seedlings, arranged to receive the seedlings (18) brought by an operator (4) to an inlet (A) of the said transport means (9, 10) and for releasing the seedlings (18) one after another at predetermined intervals between the plough share (6) and the means (2') for closing the furrow, the said seedlings (18) being displaced by the said transport means (9, 10) before the release point (B) in a movement which is substantially parallel to the ground while being held substantially vertical, the transport means comprising two endless belts (9, 10) of a flexible material, displaced at the same linear velocity, the said belts (9, 10) being held in contact with each other and facing each other between a point (A) for loading seedlings (18) and a point (B) for releasing seedlings (18), the said belts (9, 10) being held apart from each other upstream of the said loading point (A) and downstream of the said release point (B), the said machine comprising a device (20, 21) for loading seedlings (18) at the loading point (A), the said loading device being comprised of an endless belt (20),
characterized in that the said endless belt is driven in synchronism with the said belts (9, 10) of flexible material and is provided with transverse notches (21) on its outer face to receive a seedling (18) in each notch (21) without pinching it, the carrying run of the said endless belt (20) being horizontal or slanted with respect to at least one of the said belts (9, 10) of flexible material and its downstream end being next to the point (A) for loading seedlings (18) where the two belts (9, 10) of flexible material meet.

2. A machine according to claim 1, characterized in that the said belts (9, 10) are of synthetic material.

3. A machine according to one of claims 1 and 2,
characterized in that the belts (9, 10) of flexible material and the loading device (20, 21) are driven in synchronism by one wheel (2) of the machine.

## Patentansprüche

1. Vorrichtung zum Pflanzen oder zum Umpflanzen von Pflanzen (18) mit Wurzeln, beispielsweise bestimmten Gemüsen oder Sträuchern, mit einem Rahmen (1) mit Rädern (2, 2'), der mit einer Pflugschar (6) zum Öffnen einer Furche (7) und Mitteln (2') zum Schließen der Furche versehen ist, mit einem Fördermittel (9, 10) für Pflanzen, das darauf eingerichtet ist, die Pflanzen (18), die durch einen Bediener (4) zugeführt werden, an einem Eingang (A) genannten Fördermittels (9, 10) aufzunehmen und die Pflanzen (18) nacheinander mit vorbestimmten Abständen zwischen der Pflugschar (6) und den Mitteln (2') zum Schließen der Furche freizugeben, wobei genannte Pflanzen (18) durch genanntes Fördermittel (9, 10) vor dem Punkt der Freigabe (B) entlang einer zum Erdboden im wesentlichen parallelen Translation bewegt werden und dabei im wesentlichen senkrecht gehalten werden, wobei das Fördermittel zwei endlose Bänder (9, 10) aus elastischem Material aufweist, die mit derselben linearen Geschwindigkeit bewegt werden, wobei genannte Bänder (9,10) miteinander auf den einander zugewandten Seiten in Berührung gehalten sind zwischen einem Punkt (A) der Aufnahme der Pflanzen (18) und einem Punkt (B) der Freigabe der Pflanzen (18), wobei genannte Bänder (9, 10) zueinander beabstandet geführt sind in Förderrichtung vor genanntem Punkt (A) der Aufnahme und in Förderrichtung hinter genanntem Punkt (B) der Freigabe, wobei genannte Vorrichtung eine Beschickungsvorrichtung (20,21) für die Pflanzen an dem Punkt (A) der Aufnahme aufweist, wobei genannte Beschickungsvorrichtung durch ein endloses Band (20) gebildet ist,
**dadurch gekennzeichnet**, daß genanntes endloses Band synchron zu genannten Bändern (9, 10) aus elastischem Material (9, 10) angetrieben ist und an seiner Außenseite mit transversalen Einkerbungen (21) zur Aufnahme einer Pflanze (18) in jeweils einer Einkerbung (21) vorgesehen ist, ohne die Pflanze einzuschnüren, wobei der obere Trum des genannten endlosen Bandes (20) waagerecht oder im Verhältnis zu wenigstens einem genannter Bänder (9, 10) aus elastischem Material geneigt angeordnet ist und wobei sein in Förderrichtung vorderes Ende benachbart zu dem Punkt (A) der Aufnahme der Pflanzen (18) angeordnet ist, an welchem die beiden Bänder (9, 10) aus elastischem Material wieder zusammentreffen.

2. Vorrichtung nach Anspruch 1,
**dadurch gekennzeichnet**, daß genannte Bänder (9, 10) aus Kunststoff bestehen.

3. Vorrichtung nach einem der Ansprüche 1 und 2,
**dadurch gekennzeichnet**, daß die Bänder aus elastischem Material (9, 10) und die Beschickungsvorrichtung (20, 21) synchron zueinander durch ein Rad (2) der Vorrichtung angetrieben sind.
